# EUROPEAN PATENT SPECIFICATION

(11) **EP 4 418 933 B1**
(45) Date of publication and mention of the grant of the patent: **02.12.2026**
(21) Application number: 22884022.9
(22) Date of filing: 19.10.2022
(51) Int. Cl.: A24F 40/51, H02M 3/156, A24F 40/50, A24D 1/20, A24F 40/57

(54) **AEROSOL-GENERATING DEVICE AND OPERATION METHOD THEREOF**
AEROSOLERZEUGUNGSVORRICHTUNG UND BETRIEBSVERFAHREN DAFÜR
DISPOSITIF DE GÉNÉRATION D'AÉROSOL ET SON PROCÉDÉ DE FONCTIONNEMENT

(30) Priority: 20.10.2021 KR 20210140330; 05.04.2022 KR 20220042166
(43) Date of publication of application: 28.08.2024
(73) Proprietor: KT & G Corporation, Daejeon 34337 (KR)
(72) Inventor: CHO, Byungsung, Gwangmyung-si Gyeonggi-do 14241 (KR); LEE, Jongsub, Sungnam-si Gyeonggi-do 13436 (KR); PARK, Sangkyu, Seoul 05281 (KR); CHUNG, Wooseok, Namyangju-si Gyeonggi-do 12284 (KR); HAN, Daenam, Seoul 06344 (KR)
(74) Representative: Schornack, Oliver
(86) International application number: PCT/KR2022/015946
(87) International publication number: WO 2023/068800

(56) References cited:
- WO-A1-2020/153828
- WO-A2-2018/190586
- KR-A- 20190 038 181
- KR-A- 20190 060 708
- KR-A- 20200 005 082
- KR-A- 20210 036 204
- KR-A- 20210 036 204
- US-B2- 10 667 559

## Description

### Technical Field

The present disclosure relates to an aerosol-generating device and an operation method thereof.

### Background Art

An aerosol-generating device is a device that extracts certain components from a medium or a substance by forming an aerosol. The medium may contain a multicomponent substance. The substance contained in the medium may be a multicomponent flavoring substance. For example, the substance contained in the medium may include a nicotine component, an herbal component, and/or a coffee component. Recently, various research on aerosol-generating devices has been conducted. KR20210036204A discloses an aerosol-generating device and a method for operating it. The device includes a puff detection sensor that identifies when a puff occurs and also its intensity.

### Disclosure of Invention

### Technical Problem

It is an object of the present disclosure to solve the above and other problems.

It is another object of the present disclosure to provide an aerosol-generating device and an operation method thereof capable of adjusting power supplied to a heater during preheating based on the intensity of inhalation by a user.

It is still another object of the present disclosure to provide an aerosol-generating device and an operation method thereof capable of adjusting power supplied to a heater during preheating based on a usage cycle.

### Solution to Problem

An aerosol-generating device according to an aspect of the present disclosure for accomplishing the above and other objects may include a cartridge configured to accommodate a liquid-type aerosol-generating substance, a heater configured to heat the aerosol-generating substance, a power supply circuit configured to supply power to the heater, a puff sensor configured to output a signal corresponding to a puff, and a controller. The controller may control the power supply circuit such that the heater is heated in a first period during which the puff is detected by the puff sensor. Upon determining that the intensity of the puff detected in the first period is equal to or less than a predetermined reference intensity, the controller may control the power supply circuit such that predetermined first power is supplied to the heater in a second period subsequent to the first period. Upon determining that the intensity of the puff detected in the first period exceeds the reference intensity, the controller may control the power supply circuit such that second power, which is higher than the first power, is supplied to the heater in the second period.

An operation method of an aerosol-generating device according to an aspect of the present disclosure for accomplishing the above and other objects may include heating a heater configured to heat an aerosol-generating substance in a first period during which a puff is detected by a puff sensor, supplying first power to the heater in a second period subsequent to the first period when the intensity of the puff detected in the first period is equal to or less than a predetermined reference intensity, and supplying second power, which is higher than the first power, to the heater in the second period when the intensity of the puff detected in the first period exceeds the reference intensity.

### Advantageous Effects of Invention

According to at least one of embodiments of the present disclosure, it may be possible to adjust power supplied to a heater during preheating based on the intensity of inhalation by a user.

According to at least one of embodiments of the present disclosure, it may be possible to adjust power supplied to a heater during preheating based on a usage cycle.

Additional applications of the present disclosure will become apparent from the following detailed description.

### Brief Description of Drawings

The above and other objects, features and other advantages of the present disclosure will be more clearly understood from the following detailed description taken in conjunction with the accompanying drawings, in which:
FIG. 1 is a block diagram of an aerosol-generating device according to an embodiment of the present disclosure;
FIGS. 2 to 4 are views for explaining an aerosol-generating device according to embodiments of the present disclosure;
FIGS. 5 to 7 are views for explaining a stick according to embodiments of the present disclosure;
FIG. 8 is a diagram for explaining the configuration of an aerosol-generating device according to an embodiment of the present disclosure;
FIGS. 9 is a flowchart showing an operation method of the aerosol-generating device according to an embodiment of the present disclosure;
FIGS. 10 to 13 are views for explaining the operation of the aerosol-generating device; and
FIGS. 14A and 14B are flowcharts showing an operation method of the aerosol-generating device according to another embodiment of the present disclosure.

### Best Mode for Carrying out the Invention

Hereinafter, the embodiments disclosed in the present specification will be described in detail with reference to the accompanying drawings. The same or similar elements are denoted by the same reference numerals even though they are depicted in different drawings, and redundant descriptions thereof will be omitted.

In the following description, with respect to constituent elements used in the following description, the suffixes "module" and "unit" are used only in consideration of facilitation of description. The "module" and "unit" are do not have mutually distinguished meanings or functions.

In addition, in the following description of the embodiments disclosed in the present specification, a detailed description of known functions and configurations incorporated herein will be omitted when the same may make the subject matter of the embodiments disclosed in the present specification rather unclear. In addition, the accompanying drawings are provided only for a better understanding of the embodiments disclosed in the present specification and are not intended to limit the technical ideas disclosed in the present specification.

It will be understood that the terms "first", "second", etc., may be used herein to describe various components. However, these components should not be limited by these terms. These terms are only used to distinguish one component from another component.

It will be understood that when a component is referred to as being "connected to" or "coupled to" another component, it may be directly connected to or coupled to another component. However, it will be understood that intervening components may be present. On the other hand, when a component is referred to as being "directly connected to" or "directly coupled to" another component, there are no intervening components present.

As used herein, the singular form is intended to include the plural forms as well, unless the context clearly indicates otherwise.

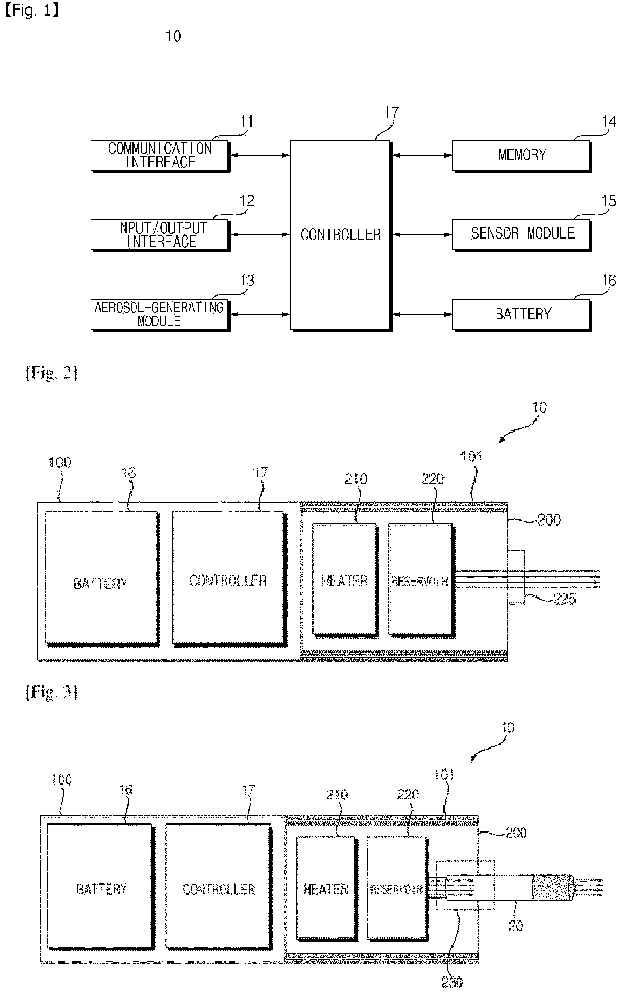

FIG. 1 is a block diagram of an aerosol-generating device according to an embodiment of the present disclosure.

Referring to FIG. 1, an aerosol-generating device 10 may include a communication interface 11, an input/output interface 12, an aerosol-generating module 13, a memory 14, a sensor module 15, a battery 16, and/or a controller 17.

In one embodiment, the aerosol-generating device 10 may be composed only of a main body. In this case, components included in the aerosol-generating device 10 may be located in the main body. In another embodiment, the aerosol-generating device 10 may be composed of a cartridge, which contains an aerosol-generating substance, and a main body. In this case, the components included in the aerosol-generating device 10 may be located in at least one of the main body or the cartridge.

The communication interface 11 may include at least one communication module for communication with an external device and/or a network. For example, the communication interface 11 may include a communication module for wired communication, such as a Universal Serial Bus (USB). For example, the communication interface 11 may include a communication module for wireless communication, such as Wireless Fidelity (Wi-Fi), Bluetooth, Bluetooth Low Energy (BLE), ZigBee, or nearfield communication (NFC).

The input/output interface 12 may include an input device (not shown) for receiving a command from a user and/or an output device (not shown) for outputting information to the user. For example, the input device may include a touch panel, a physical button, a microphone, or the like. For example, the output device may include a display device for outputting visual information, such as a display or a light-emitting diode (LED), an audio device for outputting auditory information, such as a speaker or a buzzer, a motor for outputting tactile information such as haptic effect, or the like.

The input/output interface 12 may transmit data corresponding to a command input by the user through the input device to another component (or other components) of the aerosol-generating device 100. The input/output interface 12 may output information corresponding to data received from another component (or other components) of the aerosol-generating device 10 through the output device.

The aerosol-generating module 13 may generate an aerosol from an aerosol-generating substance. Here, the aerosol-generating substance may be a substance in a liquid state, a solid state, or a gel state, which is capable of generating an aerosol, or a combination of two or more aerosol-generating substances.

According to an embodiment, the liquid aerosol-generating substance may be a liquid including a tobacco-containing material having a volatile tobacco flavor component. According to another embodiment, the liquid aerosol-generating substance may be a liquid including a non-tobacco material. For example, the liquid aerosol-generating substance may include water, solvents, nicotine, plant extracts, flavorings, flavoring agents, vitamin mixtures, etc.

The solid aerosol-generating substance may include a solid material based on a tobacco raw material such as a reconstituted tobacco sheet, shredded tobacco, or granulated tobacco. In addition, the solid aerosol-generating substance may include a solid material having a taste control agent and a flavoring material. For example, the taste control agent may include calcium carbonate, sodium bicarbonate, calcium oxide, etc. For example, the flavoring material may include a natural material such as herbal granules, or may include a material such as silica, zeolite, or dextrin, which includes an aroma ingredient.

In addition, the aerosol-generating substance may further include an aerosol-forming agent such as glycerin or propylene glycol.

The aerosol-generating module 13 may include at least one heater (not shown).

The aerosol-generating module 13 may include an electro-resistive heater. For example, the electro-resistive heater may include at least one electrically conductive track. The electro-resistive heater may be heated as current flows through the electrically conductive track. At this time, the aerosol-generating substance may be heated by the heated electro-resistive heater.

The electrically conductive track may include an electro-resistive material. In one example, the electrically conductive track may be formed of a metal material. In another example, the electrically conductive track may be formed of a ceramic material, carbon, a metal alloy, or a composite of a ceramic material and metal.

The electro-resistive heater may include an electrically conductive track that is formed in any of various shapes. For example, the electrically conductive track may be formed in any one of a tubular shape, a plate shape, a needle shape, a rod shape, and a coil shape.

The aerosol-generating module 13 may include a heater that uses an induction-heating method. For example, the induction heater may include an electrically conductive coil. The induction heater may generate an alternating magnetic field, which periodically changes in direction, by adjusting the current flowing through the electrically conductive coil. At this time, when the alternating magnetic field is applied to a magnetic body, energy loss may occur in the magnetic body due to eddy current loss and hysteresis loss. In addition, the lost energy may be released as thermal energy. Accordingly, the aerosol-generating substance located adjacent to the magnetic body may be heated. Here, an object that generates heat due to the magnetic field may be referred to as a susceptor.

Meanwhile, the aerosol-generating module 13 may generate ultrasonic vibrations to thereby generate an aerosol from the aerosol-generating substance.

The aerosol-generating device 10 may be referred to as a cartomizer, an atomizer, or a vaporizer.

The memory 14 may store programs for processing and controlling each signal in the controller 17. The memory 14 may store processed data and data to be processed.

For example, the memory 14 may store applications designed for the purpose of performing various tasks that can be processed by the controller 17. The memory 14 may selectively provide some of the stored applications in response to the request from the controller 17.

For example, the memory 14 may store data on the operation time of the aerosol-generating device 100, the maximum number of puffs, the current number of puffs, the number of uses of battery 16, at least one temperature profile, the user's inhalation pattern, and data about charging/discharging. Here, "puff" means inhalation by the user. "inhalation" means the user's act of taking air or other substances into the user's oral cavity, nasal cavity, or lungs through the user's mouth or nose.

The memory 14 may include at least one of volatile memory (e.g. dynamic random access memory (DRAM), static random access memory (SRAM), or synchronous dynamic random access memory (SDRAM)), nonvolatile memory (e.g. flash memory), a hard disk drive (HDD), or a solid-state drive (SSD).

The sensor module 15 may include at least one sensor.

For example,the sensor module 15 may include a sensor for sensing a puff (hereinafter referred to as a "puff sensor"). In this case, the puff sensor may be implemented as a proximity sensor such as an IR sensor, a pressure sensor, a gyro sensor, an acceleration sensor, a magnetic field sensor, or the like.

For example, the sensor module 15 may include a sensor for sensing a puff (hereinafter referred to as a "puff sensor"). In this case, the puff sensor may be implemented by a pressure sensor, a gyro sensor, an acceleration sensor, a magnetic field sensor, or the like.

For example, the sensor module 15 may include a sensor for sensing the temperature of the heater included in the aerosol-generating module 13 and the temperature of the aerosol-generating substance (hereinafter referred to as a "temperature sensor"). In this case, the heater included in the aerosol-generating module 13 may also serve as the temperature sensor. For example, the electro-resistive material of the heater may be a material having a predetermined temperature coefficient of resistance. The sensor module 15 may measure the resistance of the heater, which varies according to the temperature, to thereby sense the temperature of the heater.

For example, in the case in which the main body of the aerosol-generating device 10 is formed to allow a stick to be inserted thereinto, the sensor module 15 may include a sensor for sensing insertion of the stick (hereinafter referred to as a "stick detection sensor").

For example, in the case in which the aerosol-generating device 10 includes a cartridge, the sensor module 15 may include a sensor for sensing mounting/demounting of the cartridge and the position of the cartridge (hereinafter referred to as a "cartridge detection sensor").

In this case, the stick detection sensor and/or the cartridge detection sensor may be implemented as an inductance-based sensor, a capacitive sensor, a resistance sensor, or a Hall sensor (or Hall IC) using a Hall effect.

For example, the sensor module 15 may include a voltage sensor for sensing a voltage applied to a component (e.g. the battery 16) provided in the aerosol-generating device 10 and/or a current sensor for sensing a current.

The battery 16 may supply electric power used for the operation of the aerosol-generating device 10 under the control of the controller 17. The battery 16 may supply electric power to other components provided in the aerosol-generating device 100. For example, the battery 16 may supply electric power to the communication module included in the communication interface 11, the output device included in the input/ output interface 12, and the heater included in the aerosol-generating module 13.

The battery 16 may be a rechargeable battery or a disposable battery. For example, the battery 16 may be a lithium-ion (Li-ion) battery or a lithium polymer (Li-polymer) battery. However, the present disclosure is not limited thereto. For example, when the battery 16 is rechargeable, the charging rate (C-rate) of the battery 16 may be 10C, and the discharging rate (C-rate) thereof may be 10C to 20C. However, the present disclosure is not limited thereto. Also, for stable use, the battery 16 may be manufactured such that 80% or more of the total capacity may be ensured even when charging/discharging is performed 2000 times.

The aerosol-generating device 10 may further include a battery protection circuit module (PCM) (not shown), which is a circuit for protecting the battery 16. The battery protection circuit module (PCM) may be disposed adjacent to the upper surface of the battery 16. For example, in order to prevent overcharging and overdischarging of the battery 16, the battery protection circuit module (PCM) may cut off the electrical path to the battery 16 when a short circuit occurs in a circuit connected to the battery 16, when an overvoltage is applied to the battery 16, or when an overcurrent flows through the battery 16.

The aerosol-generating device 10 may further include a charging terminal to which electric power supplied from the outside is input. For example, the charging terminal may be formed at one side of the main body of the aerosol-generating device 100. The aerosol-generating device 10 may charge the battery 16 using electric power supplied through the charging terminal. In this case, the charging terminal may be configured as a wired terminal for USB communication, a pogo pin, or the like.

The aerosol-generating device 10 may further include a power terminal (not shown) to which electric power supplied from the outside is input. For example, a power line may be connected to the power terminal, which is disposed at one side of the main body of the aerosol-generating device 100. The aerosol-generating device 10 may use the electric power supplied through the power line connected to the power terminal to charge the battery 16. In this case, the power terminal may be a wired terminal for USB communication.

The aerosol-generating device 10 may wirelessly receive electric power supplied from the outside through the communication interface 11. For example, the aerosol-generating device 10 may wirelessly receive electric power using an antenna included in the communication module for wireless communication. The aerosol-generating device 10 may charge the battery 16 using the wirelessly supplied electric power.

The controller 17 may control the overall operation of the aerosol-generating device 100. The controller 17 may be connected to each of the components provided in the aerosol-generating device 100. The controller 17 may transmit and/or receive a signal to and/or from each of the components, thereby controlling the overall operation of each of the components.

The controller 17 may include at least one processor. The controller 17 may control the overall operation of the aerosol-generating device 10 using the processor included therein. Here, the processor may be a general processor such as a central processing unit (CPU). Of course, the processor may be a dedicated device such as an application-specific integrated circuit (ASIC), or may be any of other hardware-based processors.

The controller 17 may perform any one of a plurality of functions of the aerosol-generating device 100. For example, the controller 17 may perform any one of a plurality of functions of the aerosol-generating device 10 (e.g. a preheating function, a heating function, a charging function, and a cleaning function) according to the state of each of the components provided in the aerosol-generating device 10 and the user's command received through the input/output interface 12.

The controller 17 may control the operation of each of the components provided in the aerosol-generating device 10 based on data stored in the memory 14. For example, the controller 17 may control the supply of a predetermined amount of electric power from the battery 16 to the aerosol-generating module 13 for a predetermined time based on the data on the temperature profile, the user's inhalation pattern, which is stored in the memory 14.

The controller 17 may determine the occurrence or non-occurrence of a puff using the puff sensor included in the sensor module 15. For example, the controller 17 may check a temperature change, a flow change, a pressure change, and a voltage change in the aerosol-generating device 10 based on the values sensed by the puff sensor. The controller 17 may determine the occurrence or non-occurrence of a puff based on the value sensed by the puff sensor.

The controller 17 may control the operation of each of the components provided in the aerosol-generating device 10 according to the occurrence or non-occurrence of a puff and/or the number of puffs. For example, the controller 17 may perform control such that the temperature of the heater is changed or maintained based on the temperature profile stored in the memory 14.

The controller 17 may perform control such that the supply of electric power to the heater is interrupted according to a predetermined condition. For example, the controller 17 may perform control such that the supply of electric power to the heater is interrupted when the stick is removed, when the cartridge is demounted, when the number of puffs reaches the predetermined maximum number of puffs, when a puff is not sensed during a predetermined period of time or longer, or when the remaining capacity of the battery 16 is less than a predetermined value.

The controller 17 may calculate the remaining capacity with respect to the full charge capacity of the battery 16. For example, the controller 17 may calculate the remaining capacity of the battery 16 based on the values sensed by the voltage sensor and/or the current sensor included in the sensor module 15.

The controller 17 may perform control such that electric power is supplied to the heater using at least one of a pulse width modulation (PWM) method or a proportional-integral-differential (PID) method.

For example, the controller 17 may perform control such that a current pulse having a predetermined frequency and a predetermined duty ratio is supplied to the heater using the PWM method. In this case, the controller 17 may control the amount of electric power supplied to the heater by adjusting the frequency and the duty ratio of the current pulse.

For example, the controller 17 may determine a target temperature to be controlled based on the temperature profile. In this case, the controller 17 may control the amount of electric power supplied to the heater using the PID method, which is a feedback control method using a difference value between the temperature of the heater and the target temperature, a value obtained by integrating the difference value with respect to time, and a value obtained by differentiating the difference value with respect to time.

Although the PWM method and the PID method are described as examples of methods of controlling the supply of electric power to the heater, the present disclosure is not limited thereto, and may employ any of various control methods, such as a proportional-integral (PI) method or a proportional-differential (PD) method.

Meanwhile, the controller 17 may perform control such that electric power is supplied to the heater according to a predetermined condition. For example, when a cleaning function for cleaning the space into which the stick is inserted is selected in response to a command input by the user through the input/output interface 12, the controller 17 may perform control such that a predetermined amount of electric power is supplied to the heater.

FIGS. 2 to 4 are views for explaining an aerosol-generating device according to embodiments of the present disclosure.

According to various embodiments of the present disclosure, the aerosol-generating device 10 may include a main body 100 and/or a cartridge 200.

Referring to FIG. 2, the aerosol-generating device 10 according to an embodiment may include a main body 100 and a cartridge 200. The main body 100 may support the cartridge 200, and the cartridge 200 may contain an aerosol-generating substance.

According to one embodiment, the cartridge 200 may be configured so as to be detachably mounted to the main body 100. According to another embodiment, the cartridge 200 may be integrally configured with the main body 100. For example, the cartridge 200 may be mounted to the main body 100 in a manner such that at least a portion of the cartridge 200 is inserted into the insertion space formed by a housing 101 of the main body 100.

The main body 100 may be formed to have a structure in which external air can be introduced into the main body 100 in the state in which the cartridge 200 is inserted thereinto. Here, the external air introduced into the main body 100 may flow into the user's mouth via the cartridge 200.

The controller 17 may determine whether the cartridge 200 is in a mounted state or a detached state using a cartridge detection sensor included in the sensor module 15. For example, the cartridge detection sensor may transmit a pulse current through a first terminal connected with the cartridge 200. In this case, the controller 17 may determine whether the cartridge 200 is in a connected state, based on whether the pulse current is received through a second terminal.

The cartridge 200 may include a heater 210 configured to heat the aerosol-generating substance and/or a reservoir 220 configured to contain the aerosol-generating substance. For example, a liquid delivery element impregnated with (containing) the aerosol-generating substance may be disposed inside the reservoir 220. The electrically conductive track of the heater 210 may be formed in a structure that is wound around the liquid delivery element. In this case, when the liquid delivery element is heated by the heater 210, an aerosol may be generated. Here, the liquid delivery element may include a wick made of, for example, cotton fiber, ceramic fiber, glass fiber, or porous ceramic.

The cartridge 200 may include a mouthpiece 225. Here, the mouthpiece 225 may be a portion to be inserted into a user's oral cavity. The mouthpiece 325 may have a discharge hole through which the aerosol is discharged to the outside during a puff.

Referring to FIG. 3, the cartridge 200 may include an insertion space 230 configured to allow the stick 20 to be inserted. For example, the cartridge 200 may include the insertion space formed by an inner wall extending in a circumferential direction along a direction in which the stick 20 is inserted. In this case, the insertion space may be formed by opening the inner side of the inner wall up and down. The stick 20 may be inserted into the insertion space formed by the inner wall.

The insertion space into which the stick 20 is inserted may be formed in a shape corresponding to the shape of a portion of the stick 20 inserted into the insertion space. For example, when the stick 20 is formed in a cylindrical shape, the insertion space may be formed in a cylindrical shape.

When the stick 20 is inserted into the insertion space, the outer surface of the stick 20 may be surrounded by the inner wall and contact the inner wall.

A portion of the stick 20 may be inserted into the insertion space, the remaining portion of the stick 20 may be exposed to the outside.

The user may inhale the aerosol while biting one end of the stick 20 with the mouth. The aerosol generated by the heater 210 may pass through the stick 20 and be delivered to the user's mouth. At this time, while the aerosol passes through the stick 20, the material contained in the stick 20 may be added to the aerosol. The material-infused aerosol may be inhaled into the user's oral cavity through the one end of the stick 20.

The controller 17 may monitor the number of puffs based on the value sensed by the puff sensor from the point in time at which the stick 20 was inserted into the main body.

When the stick 20 is removed from the main body, the controller 17 may initialize the current number of puffs stored in the memory 14.

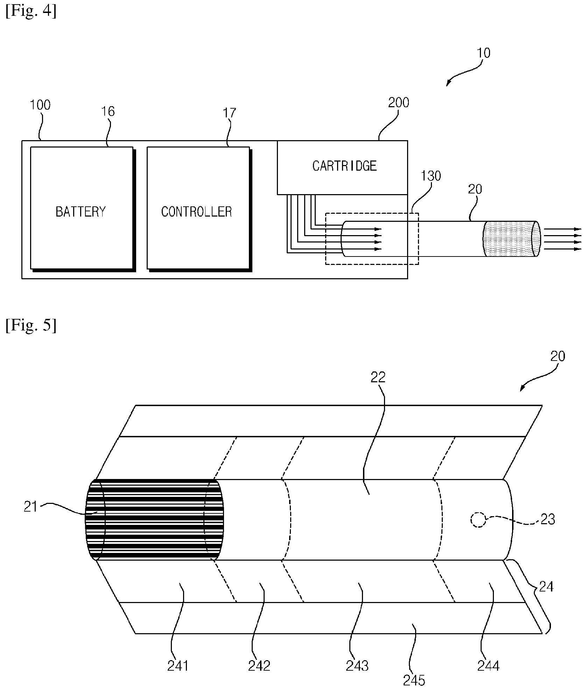

Referring to FIG. 4, the aerosol-generating device 10 according to an embodiment may include a main body 100 supporting the cartridge 200 and a cartridge 200 containing an aerosol-generating substance. The main body 100 may be formed so as to allow the stick 20 to be inserted into an insertion space 1300 therein.

The aerosol-generating device 10 may include a first heater for heating the aerosol-generating substance stored in the cartridge 200. For example, when the user holds one end of the stick 20 in the mouth to inhale the aerosol, the aerosol generated by the first heater may pass through the stick 20. At this time, while the aerosol passes through the stick 20, a flavor may be added to the aerosol. The aerosol containing the flavor may be drawn into the user's oral cavity through one end of the stick 20.

Alternatively, according to another embodiment, the aerosol-generating device 10 may include a first heater for heating the aerosol-generating substance stored in the cartridge 200 and a second heater for heating the stick 20 inserted into the main body 100. For example, the aerosol-generating device 10 may generate an aerosol by heating the aerosol-generating substance stored in the cartridge 200 and the stick 20 using the first heater and the second heater, respectively.

The stick 20 may be similar to a general combustive cigarette. For example, the stick 20 may be divided into a first portion including an aerosol generating material and a second portion including a filter and the like. Alternatively, an aerosol generating material may be included in the second portion of the stick 20. For example, a flavoring substance made in the form of granules or capsules may be inserted into the second portion.

FIGS. 5 to 7 are views for explaining a stick according to embodiments of the present disclosure.

Referring to FIG. 5, the stick 20 may include a tobacco rod 21 and a filter rod 22. The first portion described above with reference to FIG. 2 may include the tobacco rod. The second portion described above with reference to FIG. 2 may include the filter rod 22.

FIG. 5 illustrates that the filter rod 22 includes a single segment. However, the filter rod 22 is not limited thereto. In other words, the filter rod 22 may include a plurality of segments. For example, the filter rod 22 may include a first segment configured to cool an aerosol and a second segment configured to filter a certain component included in the aerosol. Also, as necessary, the filter rod 22 may further include at least one segment configured to perform other functions.

A diameter of the stick 20 may be within a range of 5 mm to 9 mm, and a length of the stick 20 may be about 48 mm, but embodiments are not limited thereto. For example, a length of the tobacco rod 21 may be about 12 mm, a length of a first segment of the filter rod 22 may be about 10 mm, a length of a second segment of the filter rod 22 may be about 14 mm, and a length of a third segment of the filter rod 22 may be about 12 mm, but embodiments are not limited thereto.

The stick 20 may be wrapped using at least one wrapper 24. The wrapper 24 may have at least one hole through which external air may be introduced or internal air may be discharged. For example, the stick 20 may be wrapped using one wrapper 24. As another example, the stick 20 may be double-wrapped using at least two wrappers 24. For example, the tobacco rod 21 may be wrapped using a first wrapper 241. For example, the filter rod 22 may be wrapped using wrappers 242, 243, 244. The tobacco rod 21 and the filter rod 22 wrapped by wrappers may be combined. The stick 20 may be re-wrapped by a single wrapper 245. When each of the tobacco rod 21 and the filter rod 22 includes a plurality of segments, each segment may be wrapped using wrappers 242, 243, 244. The entirety of stick 20 composed of a plurality of segments wrapped by wrappers may be re-wrapped by another wrapper

The first wrapper 241 and the second wrapper 242 may be formed of general filter wrapping paper. For example, the first wrapper 241 and the second wrapper 242 may be porous wrapping paper or non-porous wrapping paper. Also, the first wrapper 241 and the second wrapper 242 may be made of an oil-resistant paper sheet and an aluminum laminate packaging material.

The third wrapper 243 may be made of a hard wrapping paper. For example, a basis weight of the third wrapper 243 may be within a range of 88 g/m2 to 96 g/m2. For example, the basis weight of the third wrapper 243 may be within a range of 90 g/m2 to 94 g/m2. Also, a total thickness of the third wrapper 243 may be within a range of 1200 µm to 1300 µm. For example, the total thickness of the third wrapper 243 may be 125 µm.

The fourth wrapper 244 may be made of an oil-resistant hard wrapping paper. For example, a basis weight of the fourth wrapper 244 may be within a range of about 88 g/m2 to about 96 g/m2. For example, the basis weight of the fourth wrapper 244 may be within a range of 90 g/m2 to 94 g/m2. Also, a total thickness of the fourth wrapper 244 may be within a range of 1200 µm to 1300 µm. For example, the total thickness of the fourth wrapper 244 may be 125 µm.

The fifth wrapper 245 may be made of a sterilized paper (MFW). Here, the MFW refers to a paper specially manufactured to have enhanced tensile strength, water resistance, smoothness, and the like, compared to ordinary paper. For example, a basis weight of the fifth wrapper 245 may be within a range of 57 g/m2 to 63 g/m2. For example, a basis weight of the fifth wrapper 245 may be about 60 g/m2. Also, the total thickness of the fifth wrapper 245 may be within a range of 64 µm to 70 µm. For example, the total thickness of the fifth wrapper 245 may be 67 µm.

A predetermined material may be included in the fifth wrapper 245. Here, an example of the predetermined material may be, but is not limited to, silicon. For example, silicon exhibits characteristics like heat resistance with little change due to the temperature, oxidation resistance, resistances to various chemicals, water repellency, electrical insulation, etc. However, any material other than silicon may be applied to (or coated on) the fifth wrapper 245 without limitation as long as the material has the above-mentioned characteristics.

The fifth wrapper 245 may prevent the stick 20 from being burned. For example, when the tobacco rod 21 is heated by the heater 110, there is a possibility that the stick 20 is burned. In detail, when the temperature is raised to a temperature above the ignition point of any one of materials included in the tobacco rod 21, the stick 20 may be burned. Even in this case, since the fifth wrapper 245 include a non-combustible material, the burning of the stick 20 may be prevented.

Furthermore, the fifth wrapper 245 may prevent the aerosol generating device 100 from being contaminated by substances formed by the stick 20. Through puffs of a user, liquid substances may be formed in the stick 20. For example, as the aerosol formed by the stick 20 is cooled by the outside air, liquid materials (e.g., moisture, etc.) may be formed. As the fifth wrapper 245 wraps the stick 20, the liquid materials formed in the stick 20 may be prevented from being leaked out of the stick 20.

The tobacco rod 21 may include an aerosol generating material. For example, the aerosol generating material may include at least one of glycerin, propylene glycol, ethylene glycol, dipropylene glycol, diethylene glycol, triethylene glycol, tetraethylene glycol, and oleyl alcohol, but it is not limited thereto. Also, the tobacco rod 21 may include other additives, such as flavors, a wetting agent, and/or organic acid. Also, the tobacco rod 21 may include a flavored liquid, such as menthol or a moisturizer, which is injected to the tobacco rod 21.

The tobacco rod 21 may be manufactured in various forms. For example, the tobacco rod 21 may be formed as a sheet or a strand. Also, the tobacco rod 21 may be formed as a pipe tobacco, which is formed of tiny bits cut from a tobacco sheet. Also, the tobacco rod 21 may be surrounded by a heat conductive material. For example, the heat-conducting material may be, but is not limited to, a metal foil such as aluminum foil. For example, the heat conductive material surrounding the tobacco rod 21 may uniformly distribute heat transmitted to the tobacco rod 21, and thus, the heat conductivity applied to the tobacco rod may be increased and taste of the tobacco may be improved. Also, the heat conductive material surrounding the tobacco rod 21 may function as a susceptor heated by the induction heater. Here, although not illustrated in the drawings, the tobacco rod 21 may further include an additional susceptor, in addition to the heat conductive material surrounding the tobacco rod 21.

The filter rod 22 may include a cellulose acetate filter. Shapes of the filter rod 22 are not limited. For example, the filter rod 22 may include a cylinder-type rod or a tube-type rod having a hollow inside. Also, the filter rod 22 may include a recess-type rod. When the filter rod 22 includes a plurality of segments, at least one of the plurality of segments may have a different shape.

The first segment of the filter rod 22 may be a cellulous acetate filter. For example, the first segment may be a tube-type structure having a hollow inside. The first segment may prevent an internal material of the tobacco rod 21 from being pushed back when the heater 110 is inserted into the tobacco rod 21 and may also provide a cooling effect to aerosol. A diameter of the hollow included in the first segment may be an appropriate diameter within a range of 2 mm to 4.5 mm but is not limited thereto.

The length of the first segment may be an appropriate length within a range of 4 mm to 30 mm but is not limited thereto. For example, the length of the first segment may be 10 mm but is not limited thereto.

The second segment of the filter rod 22 cools the aerosol which is generated when the heater 110 heats the tobacco rod 21. Therefore, the user may puff the aerosol which is cooled at an appropriate temperature.

The length or diameter of the second segment may be variously determined according to the shape of the stick 20. For example, the length of the second segment may be an appropriate length within a range of 7 mm to 20 mm. Preferably, the length of the second segment may be about 14 mm but is not limited thereto.

The second segment may be manufactured by weaving a polymer fiber. In this case, a flavoring liquid may also be applied to the fiber formed of the polymer. Alternatively, the second segment may be manufactured by weaving together an additional fiber coated with a flavoring liquid and a fiber formed of a polymer. Alternatively, the second segment may be formed by a crimped polymer sheet.

For example, a polymer may be formed of a material selected from the group consisting of polyethylene (PE), polypropylene (PP), polyvinyl chloride (PVC), polyethylene terephthalate (PET), polylactic acid (PLA), cellulous acetate (CA), and aluminum coil.

As the second segment is formed by the woven polymer fiber or the crimped polymer sheet, the second segment may include a single channel or a plurality of channels extending in a longitudinal direction. Here, a channel refers to a passage through which a gas (e.g., air or aerosol) passes.

For example, the second segment formed of the crimped polymer sheet may be formed from a material having a thickness between about 5 µm and about 300 µm, for example, between about 10 µm and about 250 µm. Also, a total surface area of the second segment may be between about 300 mm2/mm and about 1000 mm2/mm. In addition, an aerosol cooling element may be formed from a material having a specific surface area between about 10 mm2/mg and about 100 mm2/mg.

The second segment may include a thread including a volatile flavor component. Here, the volatile flavor component may be menthol but is not limited thereto. For example, the thread may be filled with a sufficient amount of menthol to provide the second segment with menthol of 1.5 mg or more.

The third segment of the filter rod 22 may be a cellulous acetate filter. The length of the third segment may be an appropriate length within a range of 4 mm to 20 mm. For example, the length of the third segment may be about 12 mm but is not limited thereto.

The filter rod 22 may be manufactured to generate flavors. For example, a flavoring liquid may be injected onto the filter rod 22. For example, an additional fiber coated with a flavoring liquid may be inserted into the filter rod 22.

Also, the filter rod 22 may include at least one capsule 23. Here, the capsule 23 may generate a flavor. The capsule 23 may generate an aerosol. For example, the capsule 23 may have a configuration in which a liquid including a flavoring material is wrapped with a film. The capsule 23 may have a spherical or cylindrical shape but is not limited thereto.

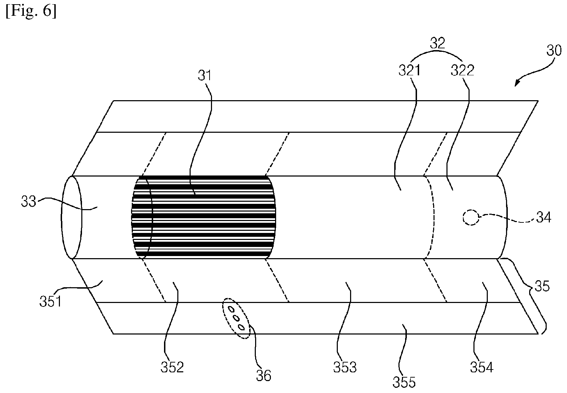

Referring to FIG. 6, a stick 30 may further include a front-end plug 33. The front-end plug 33 may be located on a side of a tobacco rod 31, the side not facing a filter rod 32. The front-end plug 33 may prevent the tobacco rod 31 from being detached and prevent liquefied aerosol from flowing into the aerosol generating device 10 from the tobacco rod 31, during smoking.

The filter rod 32 may include a first segment 321 and a second segment 322. The first segment 321 may correspond to the first segment of the filter rod 22 of FIG. 4. The segment 322 may correspond to the third segment of the filter rod 22 of FIG. 4.

A diameter and a total length of the stick 30 may correspond to the diameter and a total length of the stick 20 of FIG. 4. For example, a length of the front-end plug 33 may be about 7 mm, a length of the tobacco rod 31 may be about 15 mm, a length of the first segment 321 may be about 12 mm, and a length of the second segment 322 may be about 14 mm, but embodiments are not limited thereto.

The stick 30 may be wrapped using at least one wrapper 35. The wrapper 35 may have at least one hole through which external air may be introduced or internal air may be discharged. For example, the front-end plug 33 may be wrapped using a first wrapper 351, the tobacco rod 31 may be wrapped using a second wrapper 352, the first segment 321 may be wrapped using a third wrapper 353, and the second segment 322 may be wrapped using a fourth wrapper 354. Also, the entire stick 30 may be re-wrapped using a fifth wrapper 355.

In addition, the fifth wrapper 355 may have at least one perforation 36 formed therein. For example, the perforation 36 may be formed in an area of the fifth wrapper 355 surrounding the tobacco rod 31 but is not limited thereto. For example, the perforation 36 may transfer heat formed by the heater 210 illustrated in FIG. 3 into the tobacco rod 31.

Also, the second segment 322 may include at least one capsule 34. Here, the capsule 34 may generate a flavor. The capsule 34 may generate an aerosol. For example, the capsule 34 may have a configuration in which a liquid including a flavoring material is wrapped with a film. The capsule 34 may have a spherical or cylindrical shape but is not limited thereto.

The first wrapper 351 may be formed by combining general filter wrapping paper with a metal foil such as an aluminum coil. For example, a total thickness of the first wrapper 351 may be within a range of 45 µm to 55 µm. For example, the total thickness of the first wrapper 351 may be 50.3 µm. Also, a thickness of the metal coil of the first wrapper 351 may be within a range 6 µm to 7 µm. For example, the thickness of the metal coil of the first wrapper 351 may be 6.3 µm. In addition, a basis weight of the first wrapper 351 may be within a range of 50 g/m2 to 55 g/m2. For example, the basis weight of the first wrapper 351 may be 53 g/m2.

The second wrapper 352 and the third wrapper 353 may be formed of general filter wrapping paper. For example, the second wrapper 352 and the third wrapper 353 may be porous wrapping paper or non-porous wrapping paper.

For example, porosity of the second wrapper 352 may be 35000 CU but is not limited thereto. Also, a thickness of the second wrapper 352 may be within a range of 70 µm to 80 µm. For example, the thickness of the second wrapper 352 may be 78 µm. A basis weight of the second wrapper 352 may be within a range of 20 g/m2 to 25 g/m2. For example, the basis weight of the second wrapper 352 may be 23.5 g/m2.

For example, porosity of the third wrapper 353 may be 24000 CU but is not limited thereto. Also, a thickness of the third wrapper 353 may be in a range of about 60 µm to about 70 µm. For example, the thickness of the third wrapper 353 may be 68 µm. A basis weight of the third wrapper 353 may be in a range of about 20 g/m2 to about 25 g/m2. For example, the basis weight of the third wrapper 353 may be 21 g/m2.

The fourth wrapper 354 may be formed of PLA laminated paper. Here, the PLA laminated paper refers to three-layer paper including a paper layer, a PLA layer, and a paper layer. For example, a thickness of the fourth wrapper 353 may be in a range of 100 µm to 1200 µm. For example, the thickness of the fourth wrapper 353 may be 110 µm. Also, a basis weight of the fourth wrapper 354 may be in a range of 80 g/m2 to 100 g/m2. For example, the basis weight of the fourth wrapper 354 may be 88 g/m2.

The fifth wrapper 355 may be formed of sterilized paper (MFW). Here, the sterilized paper (MFW) refers to paper which is particularly manufactured to improve tensile strength, water resistance, smoothness, and the like more than ordinary paper. For example, a basis weight of the fifth wrapper 355 may be in a range of 57 g/m2 to 63 g/ m2. For example, the basis weight of the fifth wrapper 355 may be 60 g/m2. Also, a thickness of the fifth wrapper 355 may be in a range of 64 µm to 70 µm. For example, the thickness of the fifth wrapper 355 may be 67 µm.

The fifth wrapper 355 may include a preset material added thereto. An example of the material may include silicon, but it is not limited thereto. Silicon has characteristics such as heat resistance robust to temperature conditions, oxidation resistance, resistance to various chemicals, water repellency to water, and electrical insulation, etc. Besides silicon, any other materials having characteristics as described above may be applied to (or coated on) the fifth wrapper 355 without limitation.

The front-end plug 33 may be formed of cellulous acetate. For example, the front-end plug 33 may be formed by adding a plasticizer (e.g., triacetin) to cellulous acetate tow. Mono-denier of filaments constituting the cellulous acetate tow may be in a range of 1.0 to 10.0. For example, the mono-denier of filaments constituting the cellulous acetate tow may be within a range of 4.0 to 6.0. For example, the mono-denier of the filaments of the front-end plug 33 may be 5.0. Also, a cross-section of the filaments constituting the front-end plug 33 may be a Y shape. Total denier of the front-end plug 33 may be in a range of 20000 to 30000. For example, the total denier of the front-end plug 33 may be within a range of 25000 to 30000. For example, the total denier of the front-end plug 33 may be 28000.

Also, as needed, the front-end plug 33 may include at least one channel. A cross-sectional shape of the channel may be manufactured in various shapes.

The tobacco rod 31 may correspond to the tobacco rod 21 described above with reference to FIG. 4. Therefore, hereinafter, the detailed description of the tobacco rod 31 will be omitted.

The first segment 321 may be formed of cellulous acetate. For example, the first segment 321 may be a tube-type structure having a hollow inside. The first segment 321 may be manufactured by adding a plasticizer (e.g., triacetin) to cellulous acetate tow. For example, mono-denier and total denier of the first segment 321 may be the same as the mono-denier and total denier of the front-end plug 33.

The second segment 322 may be formed of cellulous acetate. Mono denier of filaments constituting the second segment 322 may be in a range of 1.0 to 10.0. For example, the mono denier of the filaments of the second segment 322 may be within a range of about 8.0 to about 10.0. For example, the mono denier of the filaments of the second segment 322 may be 9.0. Also, a cross-section of the filaments of the second segment 322 may be a Y shape. Total denier of the second segment 322 may be in a range of 20000 to 30000. For example, the total denier of the second segment 322 may be 25000.

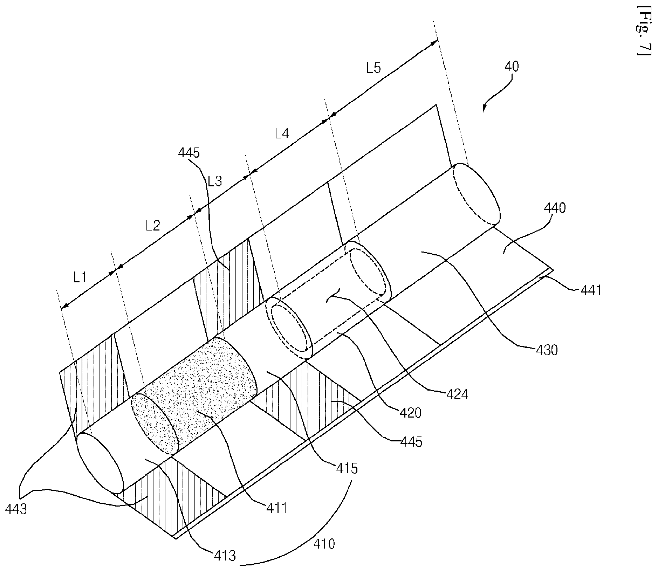

Referring to FIG. 7, the aforementioned stick 40 may include a medium portion 410. The stick 40 may include a cooling portion 420. The stick 40 may include a filter portion 430. The cooling portion 420 may be disposed between the medium portion 410 and the filter portion 430. The stick 40 may include a wrapper 440. The wrapper 440 may wrap the medium portion 410. The wrapper 440 may wrap the cooling portion 420. The wrapper 440 may wrap the filter portion 430. The stick 40 may have a cylindrical shape.

The medium portion 410 may include a medium 411. The medium portion 410 may include a first medium cover 413. The medium portion 410 may include a second medium cover 415. The medium 411 may be disposed between the first medium cover 413 and the second medium cover 415. The first medium cover 413 may be disposed at one end of the stick 40. The medium portion 410 may have a length of 24 mm.

The medium 411 may contain a multicomponent substance. The substance contained in the medium may be a multicomponent flavoring substance. The medium 411 may be composed of a plurality of granules. Each of the plurality of granules may have a size of 0.4 mm to 1.12 mm. The granules may account for approximately 70% of the volume of the medium 411. The length L2 of the medium 411 may be 10 mm. The first medium cover 413 may be made of an acetate material. The second medium cover 415 may be made of an acetate material. The first medium cover 413 may be made of a paper material. The second medium cover 415 may be made of a paper material. At least one of the first medium cover 413 or the second medium cover 415 may be made of a paper material, and may be crumpled so as to be wrinkled, and a plurality of gaps may be formed between the wrinkles so that air flows therethrough. Each of the gaps may be smaller than each of the granules of the medium 411. The length L1 of the first medium cover 413 may be shorter than the length L2 of the medium 411. The length L3 of the second medium cover 415 may be shorter than the length L2 of the medium 411. The length L1 of the first medium cover 413 may be 7 mm. The length L2 of the second medium cover 415 may be 7 mm.

Accordingly, each of the granules of the medium 411 may be prevented from being separated from the medium portion 410 and the stick 40.

The cooling portion 420 may have a cylindrical shape. The cooling portion 420 may have a hollow shape. The cooling portion 420 may be disposed between the medium portion 410 and the filter portion 430. The cooling portion 420 may be disposed between the second medium cover 415 and the filter portion 430. The cooling portion 420 may be formed in the shape of a tube that surrounds a cooling path 424 formed therein. The cooling portion 420 may be thicker than the wrapper 440. The cooling portion 420 may be made of a paper material thicker than that of the wrapper 440. The length L4 of the cooling portion 420 may be equal or similar to the length L2 of the medium 411. The length L4 of each of the cooling portion 420 and the cooling path 424 may be 10 mm. When the stick 40 is inserted into the aerosol-generating device, at least part of the cooling portion 420 may be exposed to the outside of the aerosol-generating device.

Accordingly, the cooling portion 420 may support the medium portion 410 and the filter portion 430 and may secure the rigidity of the stick 40. In addition, the cooling portion 420 may support the wrapper 440 between the medium portion 410 and the filter portion 430 and may provide a portion to which the wrapper 440 is adhered. In addition, the heated air and aerosol may be cooled while passing through the cooling path 424 in the cooling portion 420.

The filter portion 430 may be composed of a filter made of an acetate material. The filter portion 430 may be disposed at the other end of the stick 40. When the stick 40 is inserted into the aerosol-generating device, the filter portion 430 may be exposed to the outside of the aerosol-generating device. The user may inhale air in the state of holding the filter portion 430 in the mouth. The length L5 of the filter portion 430 may be 14 mm.

The wrapper 440 may wrap or surround the medium portion 410, the cooling portion 420, and the filter portion 430. The wrapper 440 may form the external appearance of the stick 40. The wrapper 440 may be made of a paper material. An adhesive portion 441 may be formed along one edge of the wrapper 440. The wrapper 440 may surround the medium portion 410, the cooling portion 420, and the filter portion 430, and the adhesive portion 441 formed along one edge of the wrapper 440 and the other edge thereof may be adhered to each other. The wrapper 440 may surround the medium portion 410, the cooling portion 420, and the filter portion 430, but may not cover one end or the other end of the stick 40.

Accordingly, the wrapper 440 may fix the medium portion 410, the cooling portion 420, and the filter portion 430, and may prevent these components from being separated from the stick 40.

A first thin film 443 may be disposed at a position corresponding to the first medium cover 413. The first thin film 443 may be disposed between the wrapper 440 and the first medium cover 413, or may be disposed outside the wrapper 440. The first thin film 443 may surround the first medium cover 413. The first thin film 443 may be made of a metal material. The first thin film 443 may be made of an aluminum material. The first thin film 443 may be in close contact with the wrapper 440 or may be coated thereon.

A second thin film 445 may be disposed at a position corresponding to the second medium cover 415. The second thin film 445 may be disposed between the wrapper 440 and the second medium cover 415 or may be disposed outside the wrapper 440. The second thin film 445 may be made of a metal material. The second thin film 445 may be made of an aluminum material. The second thin film 445 may be in close contact with the wrapper 440 or may be coated thereon.

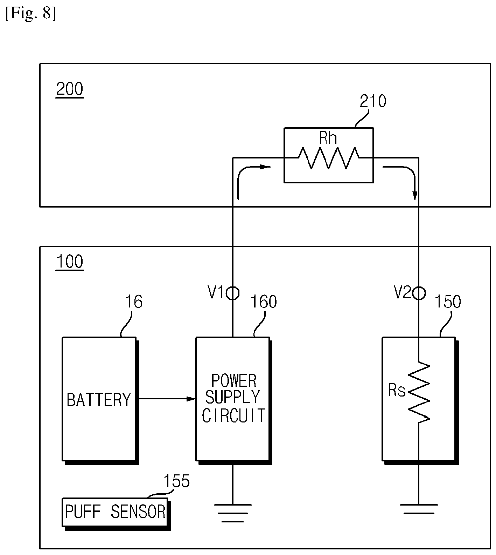

FIG. 8 is a diagram for explaining the configuration of an aerosol-generating device according to an embodiment of the present disclosure.

Referring to FIG. 8, the aerosol-generating device 10 may include a resistance detection sensor 150, a puff sensor 155, a battery 16, a power supply circuit 160, and/ or a heater 210.

According to an embodiment of the present disclosure, the resistance detection sensor 150, the puff sensor 155, the battery 16, and/or the power supply circuit 160 may be disposed in the main body 100. The heater 210 may be disposed in the cartridge 200.

When the main body 100 and the cartridge 200 are coupled to each other, the resistance detection sensor 150 of the main body 100 may be electrically connected to the heater 210 of the cartridge 200. For example, the resistance detection sensor 150 may be a current sensor for detecting current.

The power supply circuit 160, which is disposed in the main body 100, may supply power to the heater 210 using the power stored in the battery 16. In this case, the amount of power supplied from the power supply circuit 160 to the heater 210 may be adjusted under the control of the controller 17.

The power supply circuit 160 may include at least one switching element, which is operated under the control of the controller 17. In this case, power may be supplied to the heater 210 in response to operation of the switching element. For example, the switching element may be a bipolar junction transistor (BJT) or a field effect transistor (FET).

When the heater 210 and the resistance detection sensor 150 are electrically connected to each other, current having the same magnitude may flow through the heater 210 and the resistance detection sensor 150. Here, the resistance Rs of the shunt resistor provided in the resistance detection sensor 150 may be a value that does not change with temperature.

The controller 17 may determine the voltage V1 applied to the heater 210 and the resistance detection sensor 150 based on the power supplied from the power supply circuit 160 to the heater 210 and the current flowing through the heater 210 and the resistance detection sensor 150. The controller 17 may calculate the voltage V2 applied to the shunt resistor of the resistance detection sensor 150 based on the current flowing through the shunt resistor and the resistance Rs of the shunt resistor. In this case, the controller 17 may calculate the voltage applied to the heater 210 as the difference (V1-V2) between the voltage V1 applied to the heater 210 and the resistance detection sensor 150 and the voltage V2 applied to the shunt resistor. In addition, the controller 17 may calculate the resistance Rh of the heater 210 based on the voltage applied to the heater 210 and the current flowing through the heater 210.

Accordingly, the controller 17 may determine the temperature of the heater 210 in real time based on the current flowing through the heater 210, which is calculated by the resistance detection sensor 150, even while the wick is being heated by the heater 210.

Meanwhile, the resistor of the heater 210 may be a material having a temperature coefficient of resistance, and the resistance Rh of the heater 210 may vary depending on changes in the temperature of the resistor. The controller 17 may calculate the temperature of the heater 210 based on the temperature coefficient of resistance of the heater 210, the resistance Rh of the heater 210, and the resistance of the heater 210 at a reference temperature using a heater temperature calculation equation. Here, the heater temperature calculation equation used to calculate the temperature of the heater 210 may be expressed using the following Equation 1.

[Equation 1] $TCR = \left(R1-R0\right) / R 0 \div \left(T1-T0\right)$

In Equation 1 above, TCR represents the temperature coefficient of resistance of the heater 210, T1 represents the temperature of the heater 210, R1 represents the resistance of the heater 210, T0 represents the reference temperature, and R0 represents the resistance of the heater 210 at the reference temperature. Here, T0 is 25°C, and R0 is the resistance of the heater 210 at 25°C.

Although the current sensor is illustrated in this drawing as being connected in series to the heater 210, the present disclosure is not limited thereto. A temperature sensor disposed adjacent to the heater 210 to detect the temperature of the heater 210 or a voltage sensor for detecting the voltage applied to the heater 210 may be provided as the resistance detection sensor 150.

The puff sensor 155 may output a signal corresponding to a puff. For example, the puff sensor 155 may output a signal corresponding to the internal pressure of the aerosol-generating device 10. Here, the internal pressure of the aerosol-generating device 10 may correspond to the pressure in a flow path through which gas flows. In this embodiment, the puff sensor 155 is described as being implemented as a pressure sensor configured to output a signal corresponding to the internal pressure of the aerosol-generating device 10, but the present disclosure is not limited thereto.

The controller 17 may make a determination as to a puff based on a signal received from the puff sensor 155. For example, the controller 17 may determine whether a puff occurs based on a sensing value of the signal from the puff sensor 155. For example, the controller 17 may determine the intensity of a puff based on the sensing value of the signal from the puff sensor 155. For example, the controller 17 may determine the time period during which a puff occurs (hereinafter referred to as a puff time period) based on the sensing value of the signal from the puff sensor 155.

Upon determining that a puff has occurred, the controller 17 may control the aerosol-generating module 13. For example, upon determining that a puff has occurred, the controller 17 may control the aerosol-generating module 13 such that power is supplied to a heater included in the aerosol-generating module 13.

Upon determining that a puff has occurred, the controller 17 may update data stored in the memory 14. For example, upon determining that a puff has occurred, the controller 17 may update the current number of puffs stored in the memory 14. For example, upon determining that a puff has occurred, the controller 17 may update data on the intensity of a puff stored in the memory 14.

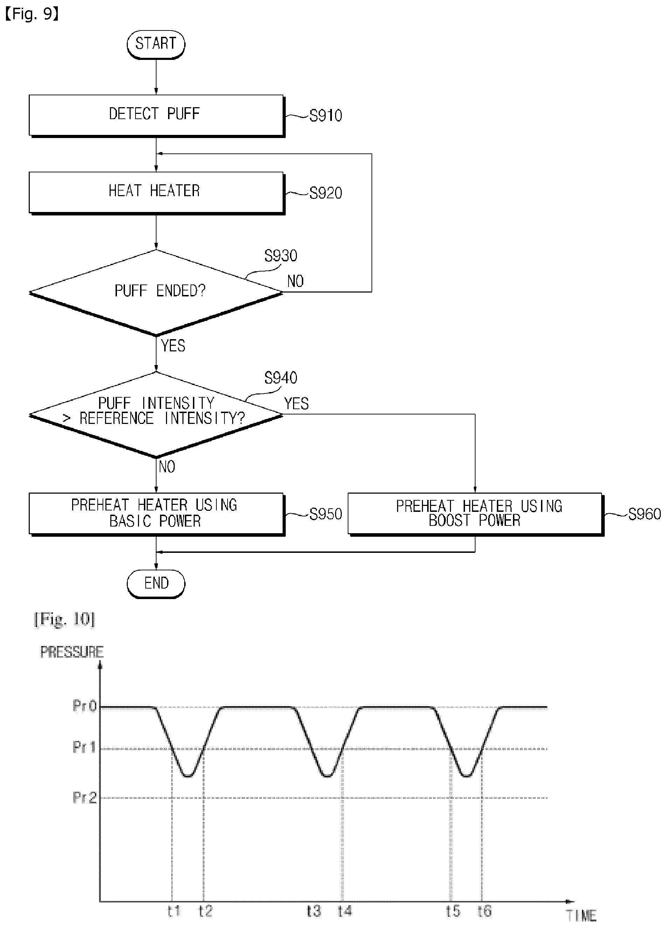

FIG. 9 is a flowchart showing an operation method of an aerosol-generating device according to an embodiment of the present disclosure.

Referring to FIG. 9, the aerosol-generating device 10 may detect a puff using the puff sensor 155 in operation S910. For example, when the internal pressure value of the aerosol-generating device 10 is less than a reference pressure value, the aerosol-generating device 10 may determine that a puff has occurred. For example, when variation in the internal pressure value of the aerosol-generating device 10 is equal to or greater than minimum variation, the aerosol-generating device 10 may determine that a puff has occurred.

Upon detecting the occurrence of a puff, the aerosol-generating device 10 may heat the heater 210 in operation S920. For example, the aerosol-generating device 10 may supply power to the heater 210 based on a predetermined temperature profile stored in the memory 14 so that the temperature of the heater 210 rises to a temperature for generating an aerosol.

According to an embodiment, the power that is supplied to the heater 210 during the heating period may vary depending on the number of puffs or a time elapsed during the heating period. For example, the power that is supplied to the heater 210 while a puff is detected may be reduced over the time for which the puff is detected.

The aerosol-generating device 10 may determine whether the puff ends in operation S930. For example, when the internal pressure value of the aerosol-generating device 10 is less than the reference pressure value, the aerosol-generating device 10 may determine that the puff has ended. For example, when the slope corresponding to the change in the internal pressure value of the aerosol-generating device 10 is greater than 0, the aerosol-generating device 10 may determine that the puff has ended.

In this embodiment, a period during which a puff is detected by the puff sensor 155 may be referred to as a heating period or a first period. The first period may be referred to as the heating period. Meanwhile, a period during which no puff is detected, for example, a period from a time point of completion of the puff to a time point of re-detection of the puff, may be referred to as a preheating period or a second period.

The aerosol-generating device 10 may determine whether the intensity of the puff detected in the heating period exceeds a predetermined reference intensity in operation S940. For example, the intensity of the puff in the heating period may correspond to the minimum value of the internal pressure value of the aerosol-generating device 10 detected in the heating period. For example, the intensity of the puff in the heating period may correspond to the maximum value of variation in the internal pressure value of the aerosol-generating device 10 detected in the heating period.

Upon determining that the intensity of the puff detected in the heating period is equal to or less than the predetermined reference intensity, the aerosol-generating device 10 may preheat the heater 210 using basic power set for the preheating period in operation S950. For example, the aerosol-generating device 10 may control the power supply circuit 160 such that the predetermined basic power, e.g. power of 0.5 W, is supplied to the heater 210. In this case, the target temperature of the heater 210 in the preheating period may be set to a relatively low temperature (e.g. 140°C).

Meanwhile, upon determining that the intensity of the puff detected in the heating period exceeds the predetermined reference intensity, the aerosol-generating device 10 may preheat the heater 210 using power (hereinafter referred to as boost power) higher than the basic power set for the preheating period in operation S960. For example, the aerosol-generating device 10 may control the power supply circuit 160 such that power of 1.0 W, which is higher than the basic power (i.e. 0.5 W), is supplied to the heater 210. In this case, the target temperature of the heater 210 in the preheating period may be set to a relatively high temperature (e.g. 200°C).

According to an embodiment, the aerosol-generating device 10 may determine the boost power based on the difference between the intensity of the puff detected in the heating period and the reference intensity. For example, when the intensity of the puff detected in the heating period exceeds the reference intensity, the aerosol-generating device 10 may determine power higher than the basic power by a predetermined level to be the boost power. In this case, the difference between the boost power and the basic power may be proportional to the difference between the intensity of the puff detected in the heating period and the reference intensity. That is, as the user more strongly inhales an aerosol in the heating period, the amount of boost power supplied to the heater 210 in the preheating period may increase.

When the amount of aerosol-generating substance contained in the liquid delivery unit is relatively large, the temperature of the aerosol-generating substance may rise relatively slowly while the heater 210 is heated. Further, when the temperature of the aerosol-generating substance rises relatively slowly, the amount of aerosol provided to the user may be reduced. On the other hand, when the amount of aerosol provided from the aerosol-generating device 10 is relatively small, the user may inhale the aerosol relatively strongly in order to inhale a sufficient amount of aerosol. In this case, the aerosol-generating device 10 may increase the power supplied to the heater 210 in the preheating period based on the intensity of inhalation by the user, thereby increasing the amount of aerosol provided to the user in the heating period.

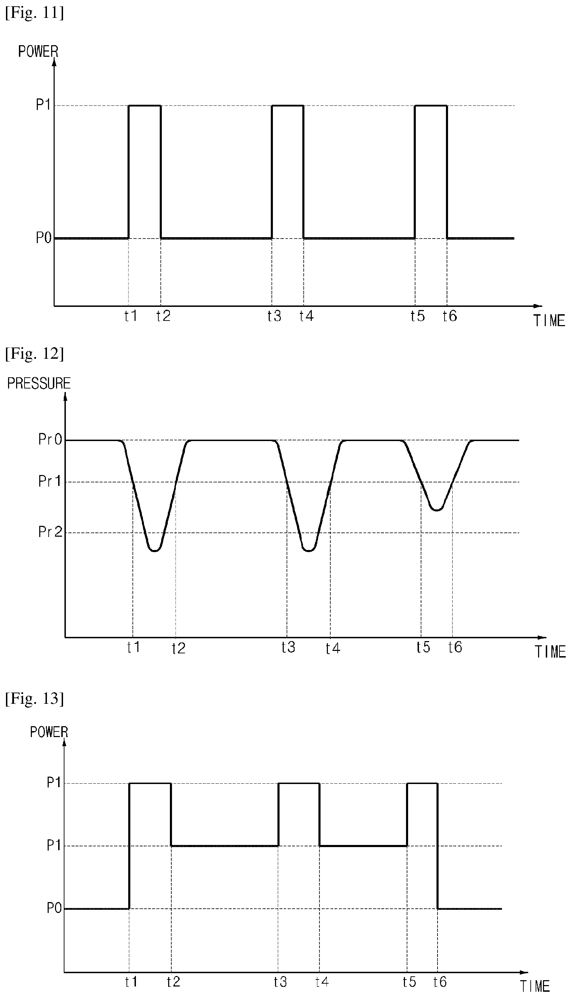

Referring to FIGs. 10 and 11, the aerosol-generating device 10 may determine that puffs have occurred at time points t1, t3, and t5, at which the internal pressure value corresponding to the signal from the puff sensor 155 is less than Pr1, which is the reference pressure value. In addition, the aerosol-generating device 10 may determine that the puffs have ended at time points t2, t4, and t6, at which the internal pressure value corresponding to the signal from the puff sensor 155 is equal to or greater than Pr1, which is the reference pressure value.

In this case, the period from the time point t1 to the time point t2 may be a first heating period, the period from the time point t3 to the time point t4 may be a second heating period, and the period from the time point t5 to the time point t6 may be a third heating period. In addition, the period prior to the time point t1 may be a first preheating period, the period from the time point t2 to the time point t3 may be a second preheating period, the period from the time point t4 to the time point t5 may be a third preheating period, and the period after the time point t6 may be a fourth preheating period.

The aerosol-generating device 10 may supply power P1 to the heater 210 while puffs are detected in the first heating period to the third heating period. In the first heating period to the third heating period, the minimum value of the internal pressure value corresponding to the signal from the puff sensor 155 may be equal to or greater than Pr2, which is the internal pressure value corresponding to the reference intensity. In this case, the aerosol-generating device 10 may determine that all of the intensities of the puffs detected in the first heating period to the third heating period are equal to or less than the reference intensity.

Upon determining that all of the intensities of the puffs detected in the first heating period to the third heating period are equal to or less than the reference intensity, the aerosol-generating device 10 may supply power P0, which is the basic power, to the heater 210 in the second preheating period to the fourth preheating period.

Meanwhile, referring to FIGs. 12 and 13, in the first heating period and the second heating period, the minimum value of the internal pressure value corresponding to the signal from the puff sensor 155 may be less than Pr2, which is the internal pressure value corresponding to the reference intensity. In this case, the aerosol-generating device 10 may determine that all of the intensities of the puffs detected in the first heating period and the second heating period exceed the reference intensity.

Upon determining that all of the intensities of the puffs detected in the first heating period and the second heating period exceed the reference intensity, the aerosol-generating device 10 may supply power P2, which is higher than power P0, which is the basic power, to the heater 210 in the second preheating period and the third preheating period. In this case, power P2, which is the boost power, may be higher than power P0, which is the basic power, and may be lower than or equal to power P1, which is the power supplied to the heater 210 in the heating period.

Meanwhile, in the third heating period, the minimum value of the internal pressure value corresponding to the signal from the puff sensor 155 may be equal to or greater than Pr2, which is the internal pressure value corresponding to the reference intensity. In this case, the aerosol-generating device 10 may determine that the intensity of the puff detected in the third heating period is equal to or less than the reference intensity. Upon determining that the intensity of the puff detected in the third heating period is equal to or less than the reference intensity, the aerosol-generating device 10 may supply power P0, which is the basic power, to the heater 210 in the fourth preheating period.

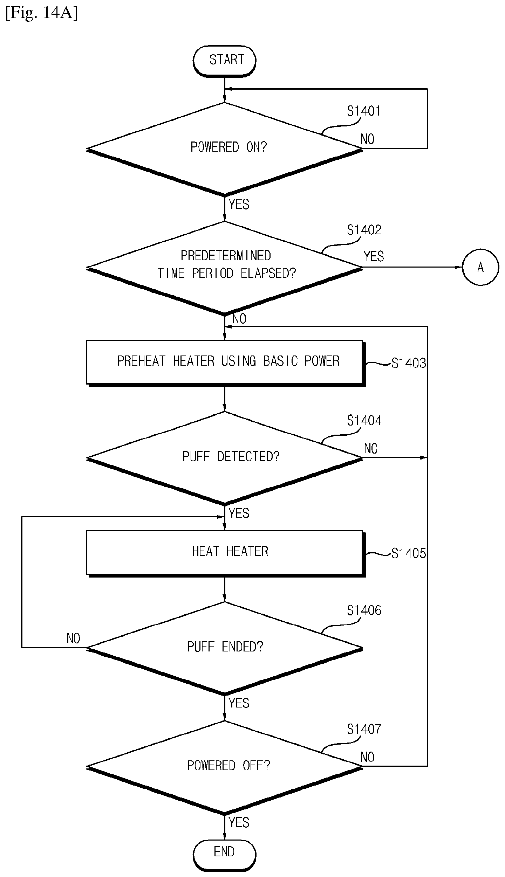

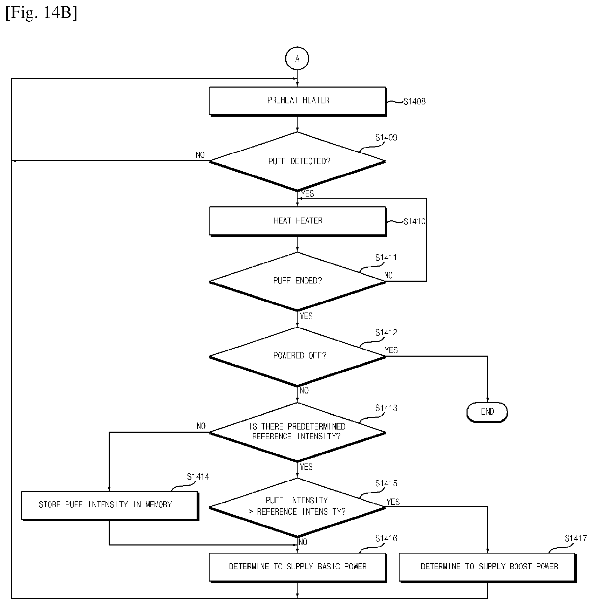

FIGs. 14A and 14B are flowcharts showing an operation method of an aerosol-generating device according to another embodiment of the present disclosure. A detailed description of the same content as that described with reference to FIGs. 9 to 13 will be omitted.

Referring to FIG. 14A, the aerosol-generating device 10 may determine whether the aerosol-generating device 10 is powered on in operation S1401. For example, the aerosol-generating device 10 may be powered on upon receiving user input for powering on the aerosol-generating device 10 through the input device. For example, the aerosol-generating device 10 may be powered on in response to insertion of the stick 20 into the insertion spaces 130 and 230, which is detected by the stick detection sensor.

The aerosol-generating device 10 may determine whether a predetermined time period elapses from the time point of interruption of supply of power to the heater 210 in operation S1402. For example, the amount of aerosol-generating substance contained in the liquid delivery unit may continuously increase from the time point of completion of generation of the aerosol. Therefore, when a predetermined time period or longer has elapsed from the time point of completion of generation of the aerosol, the amount of aerosol-generating substance contained in the liquid delivery unit may be too large.

Upon determining that the predetermined time period has not elapsed from the time point of interruption of supply of power to the heater 210, the aerosol-generating device 10 may preheat the heater 210 using the basic power set for the preheating period in operation S1403.

The aerosol-generating device 10 may determine whether a puff is detected by the puff sensor 155 in operation S1404.

Upon determining that a puff is detected, the aerosol-generating device 10 may heat the heater 210 in operation S1405.

The aerosol-generating device 10 may determine whether the puff ends in operation S1406. The aerosol-generating device 10 may supply power to the heater 210 based on a predetermined temperature profile stored in the memory 14 while the puff is detected.

The aerosol-generating device 10 may determine whether the aerosol-generating device 10 is powered off in operation S1407. For example, the aerosol-generating device 10 may be powered off upon receiving user input for powering off the aerosol-generating device 10 through the input device. For example, the aerosol-generating device 10 may be powered off in response to removal of the stick 20, which is detected by the stick detection sensor, from the insertion spaces 130 and 230. For example, upon determining that the number of puffs detected after power on is equal to or greater than the maximum number of puffs, the aerosol-generating device 10 may power off the aerosol-generating device 10.

The aerosol-generating device 10 may preheat the heater 210 using the basic power set for the preheating period while no puff is detected in the state in which the aerosol-generating device 10 is powered on.

Meanwhile, referring to FIG. 14B, upon determining that the predetermined time period or longer has elapsed from the time point of interruption of supply of power to the heater 210, the aerosol-generating device 10 may preheat the heater 210 using the basic power set for the preheating period in operation S1408.

The aerosol-generating device 10 may determine whether a puff is detected by the puff sensor 155 in operation S1409.

Upon determining that a puff is detected, the aerosol-generating device 10 may heat the heater 210 in operation S1410.

The aerosol-generating device 10 may determine whether the puff ends in operation S1411. The aerosol-generating device 10 may supply power to the heater 210 based on a predetermined temperature profile stored in the memory 14 while the puff is detected.

The aerosol-generating device 10 may determine whether the aerosol-generating device 10 is powered off in operation S1412.

Upon determining that the puff has ended, the aerosol-generating device 10 may determine whether there is a predetermined reference intensity in operation S1413.

Upon determining that there is no predetermined reference intensity, the aerosol-generating device 10 may add the intensity of the puff detected in the heating period to data on the intensity of a puff stored in the memory 14 in operation S1414.

According to an embodiment, the aerosol-generating device 10 may determine a reference intensity based on whether a predetermined condition corresponding to a puff is satisfied. Here, the predetermined condition corresponding to a puff may be whether the number of puffs detected in the cartridge 200 is equal to or greater than a predetermined number. For example, when the number of puffs detected after coupling of the cartridge 200 to the main body 100 is less than the predetermined number, e.g. 10, the aerosol-generating device 10 may store the intensity of the puff in the memory 14 in response to detection of the puff. For example, when the number of puffs detected after coupling of the cartridge 200 to the main body 100 is equal to or greater than the predetermined number, e.g. 10, the aerosol-generating device 10 may set a reference intensity based on the data on the intensity of the puff stored in the memory 14. In this case, the aerosol-generating device 10 may set the representative value of a plurality of intensity values, which are included in the data on the intensity of the puff stored in the memory 14, to the reference intensity. For example, the representative value of the plurality of intensity values may include the average value, the median value, and the most frequently occurring value.

Upon determining that there is a predetermined reference intensity, the aerosol-generating device 10 may determine whether the intensity of the puff detected in the heating period exceeds the predetermined reference intensity in operation S1415.

Upon determining that the intensity of the puff detected in the heating period is equal to or less than the predetermined reference intensity, the aerosol-generating device 10 may determine to preheat the heater 210 using the basic power set for the preheating period in operation S1416.

Meanwhile, upon determining that the intensity of the puff detected in the heating period exceeds the predetermined reference intensity, the aerosol-generating device 10 may determine to preheat the heater 210 using the boost power, which is higher than the basic power set for the preheating period, in operation S1417.

As described above, according to at least one of the embodiments of the present disclosure, it may be possible to adjust power supplied to the heater 210 during preheating based on the intensity of inhalation by the user.

According to at least one of the embodiments of the present disclosure, it may be possible to adjust power supplied to the heater 210 during preheating based on a usage cycle.

Referring to FIGs. 1 to 14B, an aerosol-generating device 10 in accordance with one aspect of the present disclosure may include a cartridge configured to accommodate a liquid-type aerosol-generating substance, a heater configured to heat the aerosol-generating substance, a power supply circuit configured to supply power to the heater, a puff sensor configured to output a signal corresponding to a puff, and a controller. The controller may control the power supply circuit such that the heater is heated in a first period during which the puff is detected by the puff sensor. Upon determining that the intensity of the puff detected in the first period is equal to or less than a predetermined reference intensity, the controller may control the power supply circuit such that predetermined first power is supplied to the heater in a second period subsequent to the first period. Upon determining that the intensity of the puff detected in the first period exceeds the reference intensity, the controller may control the power supply circuit such that second power, which is higher than the first power, is supplied to the heater in the second period.

In addition, in accordance with another aspect of the present disclosure, the second period may be a period from a time point of completion of the puff to a time point of re-detection of the puff.

In addition, in accordance with another aspect of the present disclosure, the aerosol-generating device may further include a memory configured to store data on the intensity of the puff. Upon determining that a predetermined condition corresponding to the puff is satisfied, the controller may set the reference intensity based on the data on the intensity of the puff. Upon determining that the predetermined condition corresponding to the puff is not satisfied, the controller may add the intensity of the puff detected in the first period to the data on the intensity of the puff.

In addition, in accordance with another aspect of the present disclosure, the predetermined condition may be whether the number of puffs detected in the cartridge is equal to or greater than a predetermined number.

In addition, in accordance with another aspect of the present disclosure, the controller may set the representative value of a plurality of intensity values included in the data on the intensity of the puff to the reference intensity.

In addition, in accordance with another aspect of the present disclosure, when power is supplied to the heater after lapse of a predetermined time period from a time point of interruption of supply of power to the heater, the controller may determine power supplied to the heater in the second period based on the reference intensity. When power is supplied to the heater before lapse of the predetermined time period after the time point of interruption of supply of power to the heater, the controller may determine the power supplied to the heater in the second period to be the first power.

In addition, in accordance with another aspect of the present disclosure, the difference between the first power and the second power may be proportional to the difference between the intensity of the puff and the reference intensity.

In addition, in accordance with another aspect of the present disclosure, the aerosol-generating device may further include a housing having an insertion space defined therein. The controller may control the power supply circuit such that the first power is supplied to the heater in response to insertion of a stick into the insertion space.

In addition, in accordance with another aspect of the present disclosure, when the aerosol-generating device is powered on in response to user input, the controller may control the power supply circuit such that the first power is supplied to the heater.

An operation method of an aerosol-generating device 10 in accordance with one aspect of the present disclosure may include heating a heater configured to heat an aerosol-generating substance in a first period during which a puff is detected by a puff sensor, supplying first power to the heater in a second period subsequent to the first period when the intensity of the puff detected in the first period is equal to or less than a predetermined reference intensity, and supplying second power, which is higher than the first power, to the heater in the second period when the intensity of the puff detected in the first period exceeds the reference intensity.

Certain embodiments or other embodiments of the disclosure described above are not mutually exclusive or distinct from each other. Any or all elements of the embodiments of the disclosure described above may be combined with another or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

## Claims

1. An aerosol-generating device (10) comprising:
a cartridge (200) configured to store an aerosol-generating substance;
a heater (210) configured to heat the aerosol-generating substance;
a power supply circuit (160) configured to supply power to the heater (210);
a puff sensor (155); and
at least one processor configured to:
control the power supply circuit (160) such that a temperature of the heater (210) rises in a first period during which a puff is detected by the puff sensor (155);
control the power supply circuit (160) such that a first power is supplied to the heater (210) in a second period subsequent to the first period in response to an intensity of the detected puff being equal to or less than a reference intensity; and
control the power supply circuit (160) such that a second power is supplied to the heater (210) in the second period in response to the intensity of the detected puff exceeding the reference intensity, the second power being higher than the first power;
the aerosol-generating device (10) is **characterized in that**
the second period ranges from a time point of completion of the detected puff to a time point of detection of a second puff,
the target temperature of the heater (210) in the second period is a first temperature when the first power is supplied to the heater (210) and a second temperature, which is higher than the first temperature, when the second power is supplied to the heater (210).

2. The aerosol-generating device according (10) to claim 1, further comprising a memory (14) configured to store data on puff intensity,
wherein the at least one processor is further configured to:
set the reference intensity based on the data on the puff intensity in response to a condition corresponding to the puff being satisfied; and
add data on the intensity of the detected puff to the data on the puff intensity in response to the condition corresponding to the puff not being satisfied.

3. The aerosol-generating device (10) according to claim 2, wherein the condition is whether a number of puffs detected in the cartridge (200) is equal to or greater than a reference number.

4. The aerosol-generating device (10) according to claim 2, wherein the at least one processor is further configured to set the reference intensity to be equal to a representative value of a plurality of intensity values included in the data on the puff intensity.

5. The aerosol-generating device (10) according to claim 1, wherein the at least one processor is further configured to:
determine a power to be supplied to the heater (210) in the second period based on the reference intensity in response to power being supplied to the heater (210) after lapse of a reference time period starting from a point in time of an interruption of supply of power to the heater (210); and
determine the power to be supplied to the heater (210) in the second period to be equal to the first power in response to power being supplied to the heater (210) before the lapse of the reference time period.

6. The aerosol-generating device (10) according to claim 1, wherein a difference between the first power and the second power is proportional to a difference between the intensity of the detected puff and the reference intensity.

7. The aerosol-generating device (10) according to claim 1, further comprising:
a housing (101) having an insertion space (130; 230),
wherein the at least one processor is further configured to control the power supply circuit (160) such that the first power is supplied to the heater (210) in response to insertion of a stick (20; 30) into the insertion space (130; 230).

8. The aerosol-generating device (10) according to claim 1, wherein the at least one processor is further configured to control the power supply circuit (160) such that the first power is supplied to the heater (210) based on the aerosol-generating device (10) being powered on in response to a user input.

9. A method of operation of an aerosol-generating device (10) comprising a heater (210) and a puff sensor (155), and storing an aerosol-generating substance, the method comprising:
controlling a temperature of the heater (210), wherein the heater (210) is configured to heat the aerosol-generating substance in a first period during which a puff is detected by the puff sensor (155);
supplying a first power to the heater (210) in a second period subsequent to the first period in response to an intensity of the detected puff being equal to or less than a reference intensity; and
supplying a second power to the heater (210) in the second period in response to the intensity of the detected puff exceeding the reference intensity, the second power being higher than the first power;
the method is **characterized in that**
the second period ranges from a time point of completion of the detected puff to a time point of detection of a second puff,
the target temperature of the heater (210) in the second period is a first temperature when the first power is supplied to the heater (210) and a second temperature, which is higher than the first temperature, when the second power is supplied to the heater (210).

## Patentansprüche

1. Aerosolerzeugungsvorrichtung (10), umfassend:
eine Kartusche (200), die dazu eingerichtet ist, eine Aerosol-erzeugende Substanz aufzunehmen;
ein Heizelement (210), das dazu eingerichtet ist, die Aerosol-erzeugende Substanz zu erhitzen;
eine Stromversorgungsschaltung (160), die dazu eingerichtet ist, das Heizelement (210) mit Energie zu versorgen;
einen Zugsensor (155); und
mindestens einen Prozessor, der eingerichtet ist zum:
Steuern der Stromversorgungsschaltung (160), sodass die Temperatur des Heizelements (210) in einem ersten Zeitraum ansteigt, in dem von dem Zugsensor (155) ein Zug erfasst wird;
Steuern der Stromversorgungsschaltung (160), sodass dem Heizelement (210) in einem zweiten Zeitraum, der auf den ersten Zeitraum folgt, eine erste Leistung zugeführt wird, wenn eine Intensität des erfassten Zuges gleich oder kleiner als eine Referenzintensität ist; und
Steuern der Stromversorgungsschaltung (160), sodass dem Heizelement (210) in dem zweiten Zeitraum als Reaktion darauf, dass die Intensität des erfassten Zuges die Referenzintensität überschreitet, eine zweite Leistung zugeführt wird, wobei die zweite Leistung höher ist als die erste Leistung;
wobei die Aerosolerzeugungsvorrichtung (10) **dadurch gekennzeichnet ist, dass**
der zweite Zeitraum von einem Zeitpunkt des Endes des erfassten Zuges bis zu einem Zeitpunkt der Erfassung eines zweiten Zuges reicht,
die Zieltemperatur des Heizelements (210) in dem zweiten Zeitraum eine erste Temperatur ist, wenn die erste Leistung an das Heizelement (210) abgegeben wird, und eine zweite Temperatur, die höher ist als die erste Temperatur, wenn die zweite Leistung an das Heizelement (210) abgegeben wird.

2. Aerosolerzeugungsvorrichtung (10) nach Anspruch 1, ferner umfassend einen Speicher (14), der dazu eingerichtet ist, Daten zur Zugintensität zu speichern,
wobei der mindestens eine Prozessor ferner eingerichtet ist zum:
Festlegen der Referenzintensität auf der Grundlage der Daten zur Aktionsintensität, wenn eine dem Zug entsprechende Bedingung erfüllt ist; und
Hinzufügen von Daten zur Intensität des erfassten Zuges zu den Daten zur Zugintensität, wenn die dem Zug entsprechende Bedingung nicht erfüllt ist.

3. Aerosolerzeugungsvorrichtung (10) gemäß Anspruch 2, wobei die Bedingung darin besteht, ob eine Anzahl von in der Kartusche (200) erfassten Zügen gleich oder größer als eine Referenzanzahl ist.

4. Aerosolerzeugungsvorrichtung (10) nach Anspruch 2, wobei der mindestens eine Prozessor ferner dazu eingerichtet ist, die Referenzintensität so einzustellen, dass sie einem repräsentativen Wert aus einer Mehrzahl von Intensitätswerten entspricht, die in den Daten zur Zugintensität enthalten sind.

5. Aerosolerzeugungsvorrichtung (10) nach Anspruch 1, wobei der mindestens eine Prozessor ferner eingerichtet ist zum:
Bestimmen einer dem Heizelement (210) in dem zweiten Zeitraum zuzuführende Leistung auf der Grundlage der Referenzintensität, als Reaktion darauf, dass dem Heizelement (210) nach Ablauf eines Referenzzeitraums, die zu einem Zeitpunkt der Unterbrechung der Leistungszufuhr zu dem Heizelement (210) beginnt, Leistung zugeführt wird; und
Bestimmen der dem Heizelement (210) in dem zweiten Zeitraum zuzuführende Leistung als gleich der ersten Leistung, als Reaktion darauf, dass dem Heizelement (210) vor Ablauf des Referenzzeitraums Leistung zugeführt wird.

6. Aerosolerzeugungsvorrichtung (10) nach Anspruch 1, wobei eine Differenz zwischen der ersten Leistung und der zweiten Leistung proportional zu einer Differenz zwischen der Intensität des erfassten Zugs und der Referenzintensität ist.

7. Aerosolerzeugungsvorrichtung (10) nach Anspruch 1, ferner umfassend:
ein Gehäuse (101) mit einem Einführraum (130; 230),
wobei der mindestens eine Prozessor ferner dazu eingerichtet ist, die Stromversorgungsschaltung (160) so zu steuern, dass die erste Leistung als Reaktion auf das Einführen eines Stick (20; 30) in den Einführraum (130; 230) an die Heizvorrichtung (210) geliefert wird.

8. Aerosolerzeugungsvorrichtung (10) nach Anspruch 1, wobei der mindestens eine Prozessor ferner dazu eingerichtet ist, die Stromversorgungsschaltung (160) so zu steuern, dass die erste Leistung an das Heizelement (210) geliefert wird, basierend darauf, dass die Aerosolerzeugungsvorrichtung (10) als Reaktion auf eine Benutzereingabe eingeschaltet wird.

9. Verfahren zum Betrieb einer Aerosolerzeugungsvorrichtung (10), die eine Heizvorrichtung (210) und einen Zugsensor (155) umfasst und eine Aerosolerzeugungssubstanz enthält, wobei das Verfahren umfasst:
Steuern einer Temperatur des Heizelements (210), wobei das Heizelement (210) so ausgelegt ist, dass es die Aerosolerzeugungssubstanz in einem ersten Zeitraum erhitzt, während dessen ein Zug durch den Zugsensor (155) erfasst wird;
Zuführen einer ersten Leistung an das Heizelement (210) in einem zweiten Zeitraum, der auf den ersten Zeitraum folgt, als Reaktion darauf, dass eine Intensität des erfassten Zugs gleich oder kleiner als eine Referenzintensität ist; und
Zuführen einer zweiten Leistung an das Heizelement (210) in dem zweiten Zeitraum als Reaktion darauf, dass die Intensität des erfassten Zugs die Referenzintensität überschreitet, wobei die zweite Leistung höher ist als die erste Leistung;
das Verfahren ist **dadurch gekennzeichnet, dass**
der zweite Zeitraum von einem Zeitpunkt des Endes des erfassten Zugs bis zu einem Zeitpunkt der Erfassung eines zweiten Zugs reicht,
die Zieltemperatur des Heizelements (210) im zweiten Zeitraum eine erste Temperatur ist, wenn die erste Leistung an das Heizelement (210) abgegeben wird, und eine zweite Temperatur, die höher ist als die erste Temperatur, wenn die zweite Leistung an das Heizelement (210) abgegeben wird.

## Revendications

1. Dispositif de génération d'aérosol (10) comprenant:
une cartouche (200) permettant de stocker une substance génératrice d'aérosol ;
un élément chauffant (210) conçu pour chauffer la substance génératrice d'aérosol;
un circuit d'alimentation électrique (160) conçu pour alimenter l'élément chauffant (210);
un capteur de bouffée (155); et
au moins un processeur configuré pour:
commander le circuit d'alimentation électrique (160) de manière à ce que la température de l'élément chauffant (210) augmente au cours d'une première période pendant laquelle une bouffée est détectée par le capteur de bouffée (155);
commander le circuit d'alimentation électrique (160) de telle sorte qu'une première puissance soit fournie à l'élément chauffant (210) au cours d'une deuxième période suivant la première période, dès que l'intensité de la bouffée détectée est inférieure ou égale à une intensité de référence; et
commander le circuit d'alimentation électrique (160) de telle sorte qu'une deuxième puissance soit fournie à l'élément chauffant (210) au cours de la deuxième période, dès que l'intensité de la bouffée détectée dépasse l'intensité de référence, la deuxième puissance étant supérieure à la première puissance;
le dispositif générateur d'aérosol (10) se **caractérise en ce que**
la deuxième période débute du point temporel où la bouffée détectée prend fin au point temporel où une deuxième bouffée est détectée,
la température cible de l'élément chauffant (210) au cours de la deuxième période est une première température lorsque la première puissance est fournie à l'élément chauffant (210) et une deuxième température, qui est supérieure à la première, lorsque la deuxième puissance est fournie à l'élément chauffant (210).

2. Dispositif de génération d'aérosol (10) selon la revendication 1, comprenant en outre une mémoire (14) conçue pour stocker des données relatives à l'intensité de bouffée,
dans lequel l'au moins un processeur est en outre configuré pour:
définir l'intensité de référence en fonction des données relatives à l'intensité de bouffée, dès lors qu'une condition correspondant à la bouffée est remplie; et
ajouter les données relatives à l'intensité de bouffée détectée aux données sur l'intensité de bouffée, dès que la condition correspondant à la bouffée n'est pas remplie.

3. Dispositif de génération d'aérosol (10) selon la revendication 2, dans lequel la condition consiste à déterminer si le nombre de bouffées détectées dans la cartouche (200) est supérieur ou égal à un nombre de référence.

4. Dispositif de génération d'aérosol (10) selon la revendication 2, dans lequel l'au moins un processeur est en outre configuré pour définir l'intensité de référence de manière à ce qu'elle soit égale à une valeur représentative parmi une pluralité de valeurs d'intensité contenues dans les données relatives à l'intensité de bouffée.

5. Dispositif de génération d'aérosol (10) selon la revendication 1, dans lequel l'au moins un processeur est en outre configuré pour:
déterminer la puissance à fournir à l'élément chauffant (210) au cours de la deuxième période en fonction de l'intensité de référence, dès que la puissance est fournie à l'élément chauffant (210) après expiration d'une période de temps de référence débutant à l'instant d'une interruption de l'alimentation électrique de l'élément chauffant (210); et
déterminer que la puissance à fournir à l'élément chauffant (210) au cours de la deuxième période soit égale à la première puissance, dès que la fourniture de puissance à l'élément chauffant (210) soit effectuée avant l'expiration de la période de temps de référence.

6. Dispositif de génération d'aérosol (10) selon la revendication 1, dans lequel la différence entre la première puissance et la deuxième puissance est proportionnelle à la différence entre l'intensité de la bouffée détectée et l'intensité de référence.

7. Dispositif de génération d'aérosol (10) selon la revendication 1, comprenant en outre:
un boîtier (101) comportant un espace d'insertion (130; 230),
dans lequel l'au moins un processeur est en outre configuré pour commander le circuit d'alimentation électrique (160) de telle sorte que la première tension soit fournie à l'élément chauffant (210) en réponse à l'insertion d'un bâtonnet (20; 30) dans l'espace d'insertion (130; 230).

8. Dispositif de génération d'aérosol (10) selon la revendication 1, dans lequel l'au moins un processeur est en outre configuré pour commander le circuit d'alimentation électrique (160) de manière à ce que la première puissance soit fournie à l'élément chauffant (210) lorsque le dispositif générateur d'aérosol (10) est mis sous tension en réponse à une commande de l'utilisateur.

9. Procédé de fonctionnement d'un dispositif de génération d'aérosol (10) comprenant un élément chauffant (210) et un capteur de bouffée (155), et contenant une substance génératrice d'aérosol, le procédé comprenant:
la régulation d'une température de l'élément chauffant (210), l'élément chauffant (210) étant conçu pour chauffer la substance génératrice d'aérosol pendant une première période au cours de laquelle une bouffée est détectée par le capteur de bouffée (155);
la fourniture d'une première puissance à l'élément chauffant (210) au cours d'une deuxième période suivant la première période, lorsque l'intensité de la bouffée détectée est inférieure ou égale à une intensité de référence; et
la fourniture d'une deuxième puissance à l'élément chauffant (210) au cours de la deuxième période dès que l'intensité de la bouffée détectée dépasse l'intensité de référence, la deuxième puissance étant supérieure à la première puissance;
le procédé est **caractérisé en ce que**
la deuxième période débute du point temporel où la bouffée détectée prend fin au point temporel où une deuxième bouffée est détectée,
la température cible de l'élément chauffant (210) au cours de la deuxième période est une première température lorsque la première puissance est fournie à l'élément chauffant (210) et une deuxième température, qui est supérieure à la première, lorsque la deuxième puissance est fournie à l'élément chauffant (210).
